# EUROPEAN PATENT SPECIFICATION

(11) **EP 0 443 831 B1**
(45) Date of publication and mention of the grant of the patent: **28.12.1994**
(21) Application number: 91301339.7
(22) Date of filing: 20.02.1991
(51) Int. Cl.: B23Q 1/18

(54) **Motion guiding device**
Führungsvorrichtung
Dispositif de guidage

(30) Priority: 21.02.1990 JP 38410/90
(43) Date of publication of application: 28.08.1991
(73) Proprietor: CANON KABUSHIKI KAISHA, Tokyo (JP)
(72) Inventor: Sakino, Shigeo, c/o Canon Kabushiki Kaisha, Tokyo (JP); Osanai, Eiji, c/o Canon Kabushiki Kaisha, Tokyo (JP)
(74) Representative: Beresford, Keith Denis Lewis

(56) References cited:
- EP-A- 0 291 119
- PATENT ABSTRACTS OF JAPAN vol. 11, no. 48 (M-561)(2495) 13 February 1987,& JP-A-61 209831 (OMRON TATEISI ELECTRONICS CO) 18 September 1986,
- PATENT ABSTRACTS OF JAPAN vol. 11, no. 296 (M-627) 25 September 1987,& JP-A-62 088526 (OMRON TATEISI ELECTRONICS CO) 23 April 1987,

## Description

This invention relates to a motion guiding device and, more particularly, a motion guiding device for quickly and precisely positioning, at a desired position, a movable member such as an X stage or a Y stage, for example, in a semiconductor device manufacturing apparatus or a precision machining instrument, etc.

Many proposals have been made in respect to a motion guiding device for moving a movable member along a predetermined guide and for positioning it at a desired position with high precision.

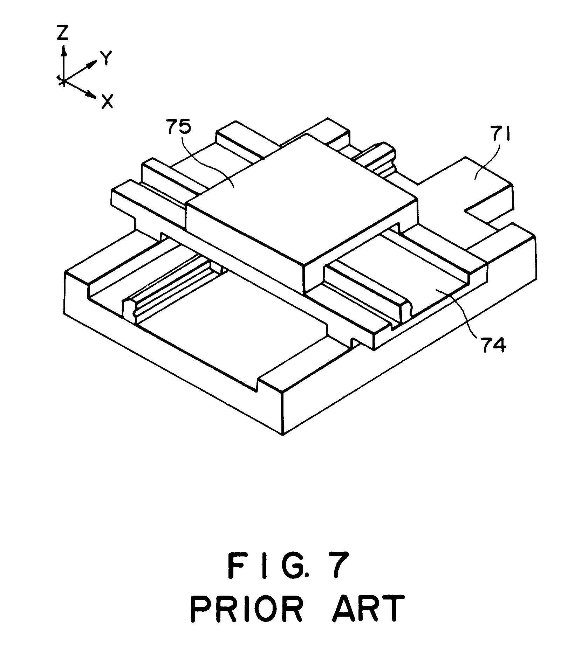

Figure 7 is a perspective view of a major part of a known type motion guiding device having X and Y moving mechanisms.

Denoted in this Figure at 71 is a base plate on which a Y stage (Y-axis direction moving mechanism) 74 is placed. On this Y stage 74, an X stage (X-axis direction moving mechanism) 75 is placed.

The X stage 75 and the Y stage 74 can be moved in predetermined directions by driving means (not shown) such as linear motors, for example.

Since the motion guiding device of the type shown in Figure 7 has an accumulative structure wherein the base plate 71, the Y stage 74 and the X stage 75 are laid accumulatively in this order, there is a disadvantage of a large height in the vertical (Z-axis) direction.

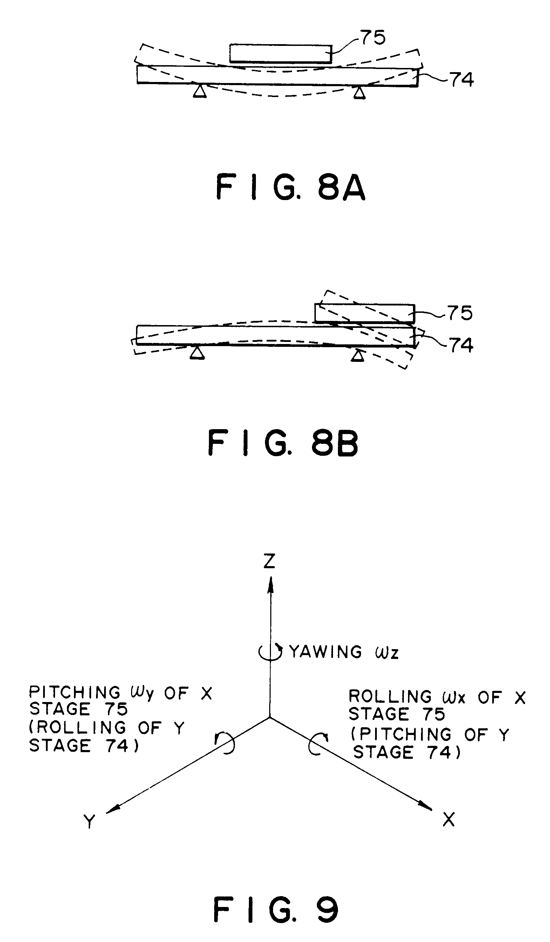

Further, as the X stage 75 moves, an unbalanced load is applied to the Y stage 74, and the Y stage 74 deforms such as depicted by broken lines in Figures 8A and 8B, for example. This results in deterioration of static attitude precision of the X stage 75.

Further, where the X stage 75 and the Y stage 74 are provided by rigid members, these stages have six freedoms as depicted in Figure 9, and all the six freedoms are coupled to each other (for example, pitching of the Y stage 74 results in creation of rolling of the X stage 75). Thus, the attitude precision is deteriorated also dynamically.

In Japanese Laid-Open Patent Application No. 62-88526, an X-Y moving mechanism with static pressure guide has been proposed. In this type of structure, however, unless all the base plate and the stages are made of the same material, a temperature change during the stage movement, if any, causes a change in the gap between bearing means and guide means which change in turn causes a change in the control characteristic and prohibits smooth positioning operation. Also, in an environment such as under transportation, for example, wherein the temperature changes largely, there is a high possibility that, due to thermal expansion or the like, the gap between the bearing means and the guide means reduces to cause damage of the static-pressure bearing means, the stage or the base plate.

Similar problems as those just mentioned also arise in the motion guide device described in Japanese patent application publication JP-A-61209831. The motion guide device described therein comprises a base having a reference surface; guide means fixed to said base and having a first guiding surface extending in a first direction; a first stage having first gas bearing means disposed opposed to said reference surface of said base and second gas bearing means disposed opposed to said first guiding surface of said guide means, said first stage also having a second guiding surface extending in a second direction which is parallel to the reference surface of said base; a second stage disposed so as to straddle said first stage, said second stage having third gas bearing means disposed opposed to said reference surface of said base, and fourth gas bearing means disposed opposed to said second guiding surface, wherein motion of said second stage in the second direction is guided by said second guiding surface of said first stage and said reference surface of said base; a first driving actuator actable on said first stage to move said first stage in the first direction, wherein said second stage is movable in the first direction with said first stage; a second driving actuator actable on said second stage to move the same in the second direction. Notably parallel fixing guide members are provided at each end of the first stage of this device.

### SUMMARY OF THE INVENTION

It is an object of the present invention to provide a motion guiding device in which guiding mechanisms for a first stage and a second stage, i.e. a Y stage and an X stage, are provided so as to eliminate moving load of the X stage upon the Y stage, for example, to thereby avoid deterioration of the static attitude precision of the X stage and to assure high-precision positioning.

It is a further object of the present invention to provide a motion guiding device by which, with regard to motion of the Y stage, for example, correlation of vibrations in three components, i.e. in a direction perpendicular to the moving direction of the Y stage, in a vertical direction and rolling, is avoided and, additionally, transmission of pitching of the Y stage to the X stage is blocked or suppressed, whereby high-precision positioning is assured.

It is a yet further object of the present invention to provide a motion guiding device by which, even if a temperature change occurs during transportation or use of the same, damage of a stage or a change in control characteristic can be prevented to thereby assure high-precision positioning.

A motion guide device in accordance with the present invention is set forth in claim 1 of the claims appended. In particular, this motion guide device is characterised in that:
said guide means consists in a single stationary guide member located at one side of said first stage;
magnet unit means is provided on said first stage and is disposed opposed to said first guiding surface, for urging said first stage toward said guide, wherein said magnet unit means is located between two gas bearings constituting said second gas bearing means which gas bearings are spaced apart in the first direction; and
the motion of said first stage in the first direction is guided only by said first guiding surface of said guide means and said reference surface of said base.

The base may be a plate made of a magnetizable material such as, for example, alloy tool steel, carbon steel or carbon tool steel. The single stationary guide member may be made of a similar magnetizable material.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figure 1 is a perspective view of a motion guiding device according to a first embodiment of the present invention.

Figure 2 is a sectional view taken on a line A-A′ in Figure 1.

Figure 3 is a side view, as seen in the direction of an arrow B in Figure 1.

Figure 4 is a side view, as seen in the direction of an arrow C in Figure 1.

Figure 5 is a bottom view of the motion guiding device of the Figure 1 embodiment.

Figure 6 is a perspective view of a motion guiding device according to a second embodiment of the present invention.

Figure 7 is a perspective view of a known type X-Y stage mechanism.

Figures 8A and 8B are schematic views, for explaining in conveniences involved in the prior art.

Figure 9 illustrates vibration modes.

### DESCRIPTION OF THE PREFERRED EMBODIMENTS

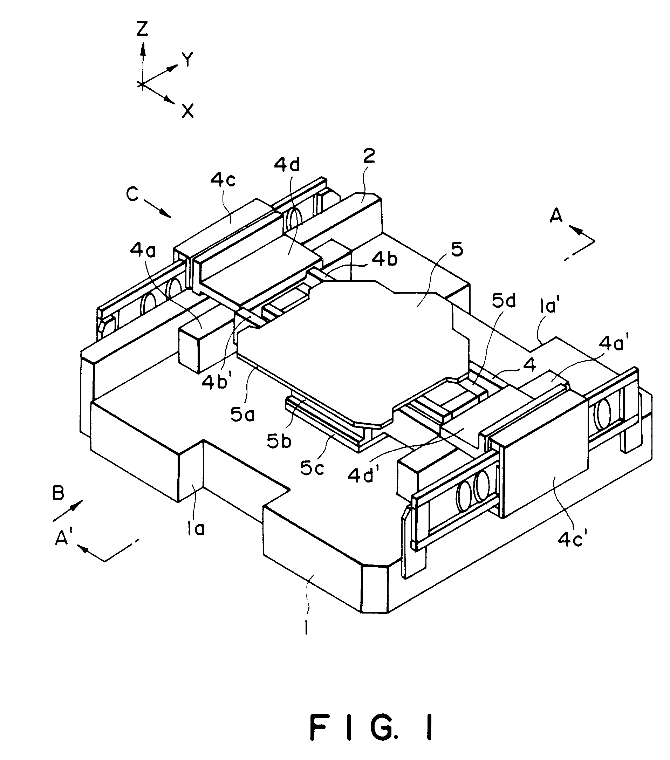

Figures 1 - 5 schematically illustrate general structure of a first embodiment of the present invention.

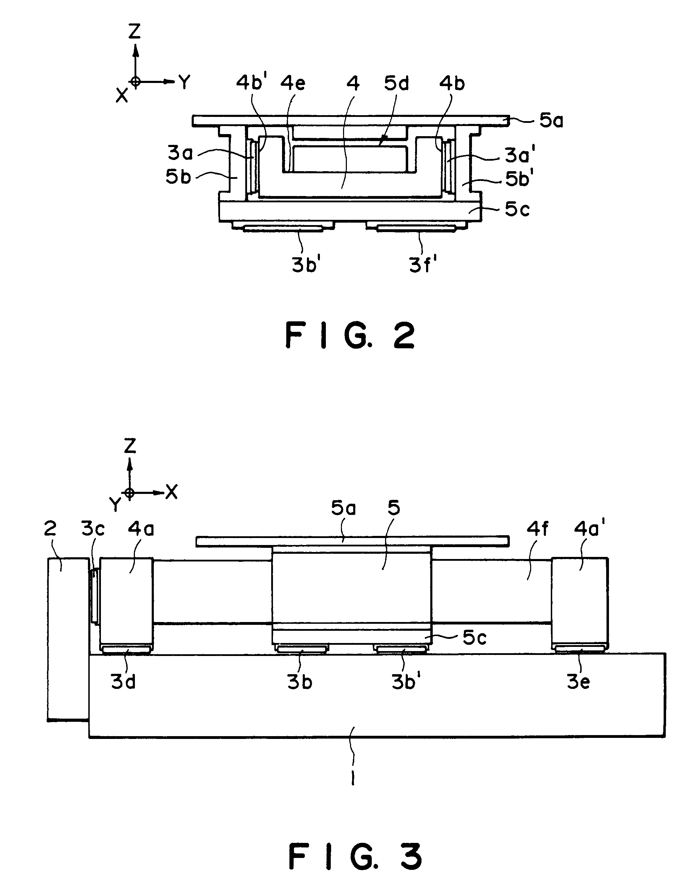

Figure 1 is a perspective view. Figure 2 is a sectional view taken on a line A-A′ in Figure 1.

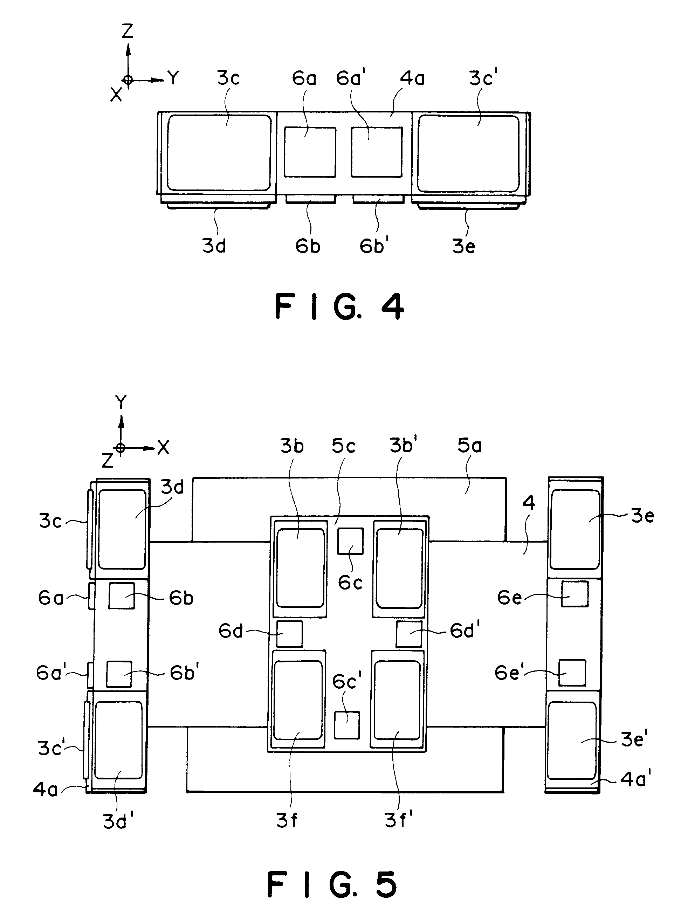

Figure 3 is a side view as seen in the arrow B direction in Figure 1. Figure 4 is a side view as seen in the arrow C direction in Figure 1. Figure 5 is a bottom view of the Figure 1 device. In these drawings, Z axis extends vertically while X and Y axes extend horizontally.

Denoted at 1 is a base plate made of a magnetizable material and having a smooth upper surface (reference surface). The reference surface is substantially parallel to the X-Y plane. Denoted at 1a and 1a′ are recesses provided for maintenance of bearing means. Denoted at 4 is a Y stage (movable member), and denoted at 5 is an X stage (movable member). Denoted at 2 is a stationary guide fixedly secured to a side surface of the base plate 1. The stationary guide 2 serves to guide the motion of the Y stage 4 in the Y-axis direction (horizontal direction), and it is made of the same magnetizable material as the base plate 1. Denoted at 3a - 3f and 3a′ - 3f′ are static-pressure gas bearings each comprising a pad of porous material. The bearings 3a and 3a′ serve to guide the motion of the X stage 5 in the X-axis direction along the Y stage 4 and to confine displacement of the same with respect to the Y-axis direction. The bearings 3b, 3b′, 3f and 3f′ serve to support the X stage 5 with respect to the reference surface of the base plate 1 and in the Z-axis direction (vertical direction). The bearings 3c and 3c′ serve to guide the motion of the Y stage 4 in the Y-axis direction along the stationary guide 2. The bearings 3d, 3d′, 3e and 3e′ serve to support the Y stage 4 with respect to the reference surface of the base plate 1 and in the Z-axis direction.

Denoted at 4a and 4a′ are mounting plates for the static-pressure gas bearings, and denoted at 4b and 4b′ are guides for the motion of the X stage 5 in the X-axis (horizontal) direction. These guides 4b and 4b′ are provided at the opposite sides of the Y stage 4, as best seen in Figure 2. The bearings 3c and 3c′ are mounted to a surface of the mounting plate 4a, facing to the stationary guide 2. The bearings 3d and 3d′ are mounted to another surface of the mounting plate 4a, facing to the base plate 1. The bearings 3e and 3e′ are mounted to a surface of the mounting plate 4a′, facing to the base plate 1.

Denoted at 4c and 4c′ are drive actuators for the Y stage 4. For example, these actuators comprise moving magnet type linear motors and are disposed at the opposite sides of the Y stage. Denoted at 4d and 4d′ are coupling plates for fixedly coupling the Y stage 4 and the drive actuators 4c and 4c′ (to be exact, moving parts of them), The coupling plate 4d is fixed to the static-pressure gas bearing mounting plate 4a, while the coupling plate 4d′ is fixed to the other static-pressure gas bearing mounting plate 4a'. Stationary parts of the drive actuators 4c and 4c' are fixedly secured to the base plate 1. Denoted at 5a is a movable plate of the X stage 5; denoted at 5b and 5b' are bearing mounting plates on which the bearings 3a and 3a' for supporting and guiding the X stage 5 in the horizontal direction are mounted; denoted at 5c is a bearing mounting plate which is fixed to the bearing mounting plates 5b and 5b' and on which the bearings 3b, 3b', 3f and 3f' for supporting the X stage 5 in the vertical direction are mounted; and denoted at 5d is a drive actuator for the X stage 5 which comprises a moving magnet type linear motor, for example. The drive actuator 5d has a stationary part fixed to a recess 4e of the Y stage 4 and a movable part fixed to the movable plate 5a.

Denoted at 6a - 6e and 6a' - 6e' are pre-loading magnet units each comprising a pre-loading mechanism such as, for example, disclosed in Japanese laid-Open Patent Application No. 63-232912, as having a permanent magnet (magnetic force means) and yokes provided at the opposite sides thereof. Such a pre-loading mechanism is effective, when a pressurized fluid is supplied to a static-pressure bearing to float a movable member, to prevent inclination of the movable member due to variation in the bearing characteristic, by means of the magnetic force acting in the opposite direction to the floating force provided by the bearing, and thereby to maintain constant attitude.

In this embodiment, the drive actuators 4c, 4c′ and 5d may comprise hydraulic DC motors, for example, in place of linear motors.

In the present embodiment, in response to supply of gases from a supply source (not shown) to the static-pressure gas bearings 3d, 3d′, 3e and 3e′, the Y stage 4 floats from the base plate 1. Also, in response to supply of gases to the bearings 3c and 3c′, the Y stage 4 floats from the stationary guide 2. In this state, the Y stage 4 can be moved in the Y-axis direction along the stationary guide 2 by means of the two drive actuators 4c and 4c′.

Also, in response to supply of gases to the static-pressure gas bearings 3b, 3b′, 3f and 3f′, the X stage 5 floats from the base plate 1, similarly to the Y stage 4. Also, in response to supply of gases to the bearings 3a and 3a′, the X stage 5 floats from the guides 4b and 4b′, and it can be moved in the X-axis direction by means of the drive actuator 5c, while being guided in the X-axis direction by the guides 4b and 4b′ mounted to the side surfaces of the Y stage 4. Here, under the influence of the pre-loading magnet units 6a - 6e and 6a′ - 6e′, the X stage 5 and the Y stage 4 are adjusted to maintain constant attitude with respect to the reference surface of the base plate 1 and the guiding surface of the stationary guide 2. The magnet units 6a and 6a' are mounted on a side of the mounting plate 4a so as to be opposed to the guiding surface of the stationary guide 2, and they apply magnetic forces to the stationary guide 2 so as to attract the Y stage 4 to the stationary guide 2 in respect to the X-axis direction. The magnet units 6 and 6' are disposed between the bearings 3c and 3c'. The magnet units 6b, 6b', 6e and 6e' are mounted on the bottom surfaces of the mounting plates 4a and 4a' so as to be opposed to the reference surface of the base plate 1, and they apply magnetic forces to the base plate 1 so as to attract the Y stage 4 to the base plate 1 in respect to the Z-axis direction. The magnet units 6c, 6c', 6d and 6d' are mounted on the mounting plate 5c so as to be opposed to the reference surface of the base plate 1, and they act on the X stage 5 in the same manner as the magnet units 6b, 6b', 6e and 6e' act on the Y stage 4.

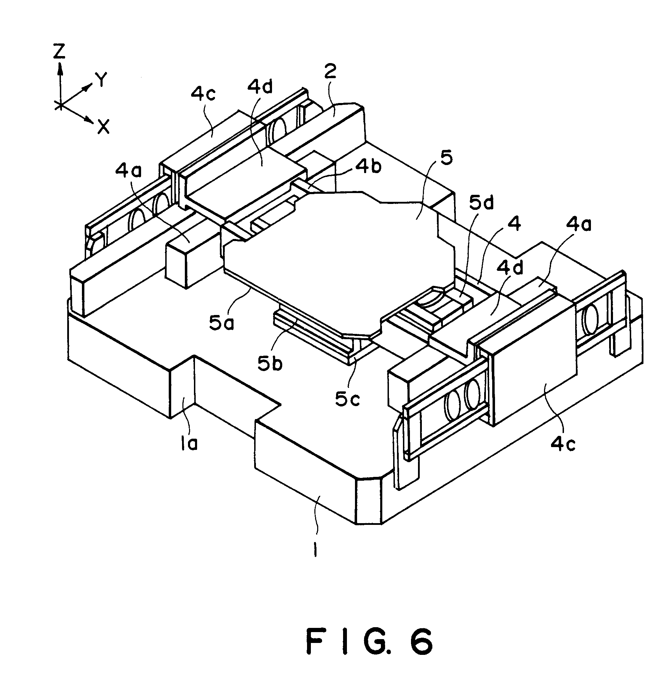

Important features of the present embodiment are as follows:
(a) Support for each of the X stage and the Y stage in a vertical direction (Z-axis direction) is provided by the base plate 1, such that the movement of one of the X stage and the Y stage does not produce a moving load applied to the other stage. Thus, the static attitude can be retained satisfactorily.
(b) The vibration coupling between the X stage and the Y stage with respect to three components, i.e. in a longitudinal direction (X direction in Figure 1), a perpendicular direction (Z direction in Figure 1) and rolling (rotation about the y-axis in Figure 1), can be completely avoided.
(c) Any pitching of the Y stage (rotation thereof about the X-axis in Figure 1) may be transmitted to the X stage only through the gas bearing means 3a and 3a'. Therefore, the coupling between the Y stage and the X stage with respect to the pitching of the Y stage is suppressed to a minimum.
(d) The device may be structured so that the carrying table 5a overhangs the stationary guide 2 or the Y stage driving actuators 4c with respect to the X-axis direction. By doing so, the area to be occupied by the base plate 1 is kept as small as that in conventional devices.
(e) The height of the movement guiding device as a whole, including that of the base plate 1, can be reduced to about a half of that of the conventional devices.
(f) By adjusting the height of the coupling plates 4d and 4d', it is possible that the point of drive for the Y stage substantially coincides with the center of gravity of the whole X-Y stage mechanism, with respect to the height direction (Z-axis direction). This is very effective to minimize the occurrence of vibration upon the driving of the Y stage.
(g) The length of each gas bearing mounting plate 4a or 4a' of the Y stage 4, in the Y-axis direction, is made equal to the length of the movable plate 5a of the X stage 5 with respect to the Y-axis direction. By this, unpreferable increase in the movable area for movement of the movable plate 5a, can be prevented.
(h) Both the base plate 1 and the stationary guide 2, and both the Y stage 4 and X stage 5, respectively, can be made of different materials having different thermal expansion coefficients. As an example, the base plate 1 and the stationary guide 2 can be made of a magnetizable material for the magnet pre-loading, while the Y stage 4 and the X stage 5 can be made of a material such as ceramics, for example, for reduction in weight and increase in rigidity. Since only a single stationary guide 2 is used and only one surface is used as a reference, any temperature difference does not cause a change in the characteristic.
(i) The provision of recesses 1a and 1a' in the base plate 1 assures easy cleaning if foreign particles enter the clearance below the static pressure bearing mounting plate 5c in the vertical (Z-axis) direction of the X stage 5, by moving the X stage 5 to the recess 1a or 1a'.
(j) By making the horizontal bearing mounting plate 5b (5b') of the X stage 5 into a channel shape such as shown in Figure 2, the area of contact of it to the movable plate 5a and the mounting plate 5c increases, resulting in enhanced reliability of the coupling portion to slip.
(k) Since the stationary guide 2 is mounted laterally to the side surface of the base plate 1, it does not shift laterally. Figure 6 is a perspective view of a second embodiment of the present invention. In this embodiment, like numerals are assigned to the elements corresponding to those of the first embodiment.
   In this embodiment, the stationary guide 2 is mounted on the upper surface (reference surface) of the base plate 1 by fixing means (not shown) such as bolts, adhesion or the like. Except for this point, the structure of this embodiment is the same as the Figure 1 embodiment.
   In addition to the advantageous features (a) - (j) of the first embodiment, the present embodiment provides the following advantages:
(l) Since there is no necessity of machining and finishing the stationary guide mounting surface (side surface) of the base plate 1 of Figure 1, the manufacturing cost decreases.
(m) Since the height of the stationary guide 2 can be made low, use of a thinner member can retain sufficient rigidity.

As described hereinbefore, support for the X stage and the Y stage in the vertical direction is provided by the base plate surface only, while the guiding of the Y stage in a lateral direction is provided by a single stationary guide mounted on the base plate. Also, the guiding of the X stage in a lateral direction is provided by a side surface of the Y stage. This effectively avoids moving load of the Y stage and assures complete blocking of transmission, to the X stage, of vibration of the Y stage such as that in the vertical direction, that in the X-axis direction and rolling. Additionally, any pitching of the Y stage is hardly transmitted to the X stage. Thus, the coupling is minimized and high-precision positioning is ensured.

Further, the guiding of the Y stage in the lateral direction only through a single stationary guide on the base plate assures that, irrespective of any difference in material property (thermal expansion coefficient) of the base plate and the stationary guide in comparison with the X stage and the Y stage, the bearing characteristic does not change at all and, for this reason, high-precision positioning is assured.

## Claims

1. A motion guide device, comprising a base (1) having a reference surface; guide means (2) fixed to said base (1) and having a first guiding surface extending in a first direction (Y); a first stage (4) having first gas bearing means (3d, 3e) disposed opposed to said reference surface of said base (1) and second gas bearing means (3c, 3c') disposed opposed to said first guiding surface of said guide means (2), said first stage (4) also having a second guiding surface extending in a second direction (X) which is parallel to the reference surface of said base (1); a second stage (5) disposed so as to straddle said first stage (4), said second stage having third gas bearing means (3b, 3b') disposed opposed to said reference surface of said base (1), and fourth gas bearing means (3a,3a') disposed opposed to said second guiding surface, wherein motion of said second stage (5) in the second direction is guided by said second guiding surface of said first stage and said reference surface of said base (1); a first driving actuator (4c, 4c') actable on said first stage (4) to move said first stage (4) in the first direction (Y), wherein said second stage (5) is movable in the first direction (Y) with said first stage; a second driving actuator (5d) actable on said second stage (5) to move the same in the second direction (X);
the motion guide device being characterised in that:
said guide means (2) consists in a single stationary guide member (2) located at one side of said first stage (4);
magnet unit means (6a, 6a') is provided on said first stage (4) and is disposed opposed to said first guiding surface, for urging said first stage (4) toward said guide, wherein said magnet unit means (6a, 6a') is located between two gas bearings (3c,3c') constituting said second gas bearing means (3c,3c') which gas bearings (3c,3c') are spaced apart in the first direction (Y); and
the motion of said first stage (4) in the first direction (Y) is guided only by said first guiding surface of said guide means (2) and said reference surface of said base (1).

2. A device according to claim 1, wherein said first driving actuator (4c,4c') includes two linear motors each having a movable portion coupled integrally with opposite end portions of said first stage (4) and a stationary portion coupled integrally with said base (1).

3. A device according to claim 2, wherein said second driving actuator (5d) includes a linear motor having a movable portion coupled integrally with said second stage (5) and a stationary portion coupled integrally with said first stage (4).

4. A device according to claim 1, wherein a point of drive of said first driving actuator (4c,4c') to said first stage (4) substantially coincides with a centre of gravity of the first and second stages (4,5), with respect to a direction (Z) perpendicular to said reference surface of said base (1).

5. A device according to claim 1, wherein said base (1) has recesses (1a, 1a') formed in opposite end portions thereof, which recesses (1a, 1a') are spaced apart in said first direction (Y).

6. A device according to claim 1, wherein each of said first and second stages (4,5) is of ceramics material.

## Patentansprüche

1. Führungsvorrichtung mit
einer Basis (1), die eine Bezugsfläche hat,
einer Führungseinrichtung (2), die an der Basis (1) befestigt ist und eine sich in eine erste Richtung (Y) erstreckende erste Führungsfläche hat,
einer ersten Plattform (4), die eine erste Gaslagereinrichtung (3d, 3e), welche gegenüber der Bezugsfläche der Basis (1) angeordnet ist, und eine zweite Gaslagereinrichtung (3c, 3c') hat, welche gegenüber der ersten Führungsfläche der Führungseinrichtung (2) angeordnet ist, wobei die erste Plattform (4) auch eine zweite Führungsfläche hat, die sich in einer zweiten Richtung (X) erstreckt, welche parallel zu der Bezugsfläche der Basis (1) ist,
einer zweiten Plattform (5), die derart angeordnet ist, daß sie über der ersten Plattform (4) verläuft, wobei die zweite Plattform eine dritte Gaslagereinrichtung (3b, 3b'), die gegenüber der Bezugsfläche der Basis (1) angeordnet ist, und eine vierte Gaslagereinrichtung (3a, 3a') aufweist, die gegenüber der zweiten Führungsfläche angeordnet ist, wobei die Bewegung der zweiten Plattform (5) in der zweiten Richtung mittels der zweiten Führungsfläche der ersten Plattform und der Bezugsfläche der Basis (1) geführt wird,
einer ersten Antriebsstelleinrichtung (4c, 4c'), die an der ersten Plattform (4) betätigbar ist, um die erste Plattform (4) in die erste Richtung (Y) zu bewegen, wobei die zweite Plattform (5) mit der ersten Plattform in die erste Richtung (Y) bewegbar ist,
einer zweiten Antriebsstelleinrichtung (5d), die an der zweiten Plattform (5) betätigbar ist, um diese in die zweite Richtung (X) zu bewegen,
wobei die Führungsvorrichtung **dadurch gekennzeichnet ist, daß**
die Führungseinrichtung (2) aus einem einzelnen stationären Führungselement (2) besteht, das an einer Seite der ersten Plattform (4) angeordnet ist,
an der ersten Plattform (4) eine Magneteinheit-Einrichtung (6a, 6a') geschaffen ist, und gegenüber der ersten Führungsfläche angeordnet ist, um die erste Plattform (4) in Richtung auf die Führung anzudrücken, wobei die Magneteinheit-Einrichtung (6a, 6a') zwischen zwei Gaslagern (3c, 3c') angeordnet ist, welche die zweite Gaslagereinrichtung (3c, 3c') bilden, wobei diese Gaslager (3c, 3c') in der ersten Richtung (Y) voneinander beabstandet sind, und
die Bewegung der ersten Plattform (4) in der ersten Richtung (Y) nur durch die erste Führungsfläche der Führungseinrichtung (2) und die Bezugsfläche der Basis (1) geführt wird.

2. Vorrichtung gemäß Anspruch 1, wobei die erste Antriebsstelleinrichtung (4c, 4c') zwei Linearmotoren enthält, die jeder einen bewegbaren Abschnitt, der einstückig mit gegenüberliegenden Endabschnitten der ersten Plattform (4) gekoppelt ist, und einen stationären Abschnitt, der einstückig mit der Basis (1) gekoppelt ist, aufweisen.

3. Vorrichtung gemäß Anspruch 2, wobei die zweite Antriebsstelleinrichtung (5d) einen Linearmotor enthält, der einen bewegbaren Abschnitt, der einstückig mit der zweiten Plattform (5) gekoppelt ist, und einen stationären Abschnitt, der einstückig mit der ersten Plattform (4) gekoppelt ist, aufweist.

4. Vorrichtung gemäß Anspruch 1, wobei ein Punkt des Antriebs der ersten Antriebsstelleinrichtung (4c, 4c') für die erste Plattform (4) mit Bezug auf eine Richtung (Z) senkrecht zu der Bezugsfläche der Basis (1) im wesentlichen mit einem Schwerpunkt der ersten und der zweiten Plattform (4, 5) übereinstimmt.

5. Vorrichtung gemäß Anspruch 1, wobei die Basis (1) Ausnehmungen (1a, 1a') aufweist, die an deren gegenüberliegenden Endabschnitten ausgebildet sind, wobei die Ausnehmungen (1a, 1a') in der ersten Richtung (Y) voneinander beabstandet sind.

6. Vorrichtung gemäß Anspruch 1, wobei jede der Plattformen, die erste und die zweite Plattform (4, 5), aus Keramikmaterial besteht.

## Revendications

1. Dispositif de guidage de mouvement, comportant une embase (1) ayant une surface de référence ; un moyen de guidage (2) fixé à ladite embase (1) et présentant une première surface de guidage s'étendant dans une première direction (Y) ; une première platine (4) ayant des premiers moyens d'appui à gaz (3d, 3e) disposés de façon à être opposés à ladite surface de référence de ladite embase (1) et des seconds moyens d'appui à gaz (3c, 3c') disposés de façon à être opposés à ladite première surface de guidage dudit moyen de guidage (2), ladite première platine (4) ayant aussi une seconde surface de guidage s'étendant dans une deuxième direction (X) qui est parallèle à la surface de référence de ladite embase (1) ; une seconde platine (5) disposée de façon à chevaucher ladite première platine (4), ladite seconde platine ayant des troisièmes moyens d'appui à gaz (3b, 3b') disposés de façon à être opposés à ladite surface de référence de ladite embase (1) et des quatrièmes moyens d'appui à gaz (3a, 3a') disposés de façon à être opposés à ladite seconde surface de guidage, un mouvement de ladite seconde platine (5) dans la deuxième direction étant guidé par ladite seconde surface de guidage de ladite première platine et par ladite surface de référence de ladite embase (1) ; un premier actionneur d'entraînement (4c, 4c') pouvant agir sur ladite première platine (4) afin de déplacer ladite première platine (4) dans la première direction (Y), ladite seconde platine (5) étant mobile dans la première direction (Y) avec ladite première platine ; un second actionneur d'entraînement (5d) pouvant agir sur ladite seconde platine (5) pour la déplacer dans la deuxième direction (X) ;
le dispositif de guidage de mouvement étant caractérisé en ce que :
ledit moyen de guidage (2) consiste en un élément fixe et unique (2) de guidage situé sur un côté de ladite première platine (4) ;
des moyens à unités magnétiques (6a, 6a') sont prévus sur ladite première platine (4) et sont disposés de façon à être opposés à ladite première surface de guidage, pour solliciter ladite première platine (4) vers ledit guide, lesdits moyens à unités magnétiques (6a, 6a') étant placés entre deux appuis à gaz (3c, 3c') constituant lesdits deuxièmes moyens d'appui à gaz (3c, 3c'), lesquels appuis à gaz (3c, 3c') sont espacés dans la première direction (Y) ; et
le mouvement de ladite première platine (4) dans la première direction (Y) est guidé uniquement par ladite première surface de guidage dudit moyen (2) de guidage et par ladite surface de référence de ladite embase (1).

2. Dispositif selon la revendication 1, dans lequel ledit premier actionneur (4c, 4c') d'entraînement comprend deux moteurs linéaires ayant chacun une partie mobile accouplée de façon intégrée à des parties extrêmes opposées de ladite première platine (4) et une partie fixe accouplée de façon intégrée à ladite embase (1).

3. Dispositif selon la revendication 2, dans lequel ledit second actionneur (5d) d'entraînement comprend un moteur linéaire ayant une sortie mobile accouplée de façon intégrée à ladite seconde platine (5) et une partie fixe accouplée de façon intégrée à ladite première platine (4).

4. Dispositif selon la revendication 1, dans lequel un point d'entraînement dudit premier actionneur d'entraînement (4c, 4c') sur ladite première platine (4) coïncide sensiblement avec un centre de gravité des première et seconde platines (4, 5), par rapport à une direction (Z) perpendiculaire à ladite surface de référence de ladite embase (1).

5. Dispositif selon la revendication 1, dans lequel ladite embase (1) présente des évidements (1a, 1a') formés dans des parties extrêmes opposées de cette embase, lesquels évidements (1a, 1a') sont espacés l'un de l'autre dans ladite première direction (Y).

6. Dispositif selon la revendication 1, dans lequel chacune desdites première et seconde platines (4, 5) est en matière céramique.
